# EUROPEAN PATENT APPLICATION

(11) **EP 4 465 735 A1**
(43) Date of publication of application: **20.11.2024**
(21) Application number: 24170842.9
(22) Date of filing: 17.04.2024
(51) Int. Cl.: H04W 72/51, H04L 5/00, H04W 52/36

(54) **METHODS FOR UE ASSISTANCE INFORMATION FOR DWS OF MULTI-PUSCH CONFIGURATION IN MULTI-CELL**

(30) Priority: 15.05.2023 US 202363466428 P
(71) Applicant: Nokia Technologies Oy, 02610 Espoo (FI)
(72) Inventor: KASAN, Karim, Massy (FR); SAAD, Majed, Massy (FR); AHMADIAN TEHRANI, Amir Mehdi, Munich (DE); NHAN, Nhat-Quang, Reims (FR); MASO, Marco, Issy les Moulineaux (FR)
(74) Representative: Script Intellectual Property LLP

(57) **Abstract**

An apparatus configured to: receive, from a user equipment, assistance information on power amplifier characteristics of the user equipment, wherein the user equipment is configured to perform multiple uplink transmissions to multiple cells; configure at least one uplink transmission resource, based on the assistance information, for at least one uplink transmission of the multiple uplink transmissions; and transmit, to the user equipment, an indication of a waveform switching configuration related to the at least one uplink transmission resource.

## Description

### TECHNICAL FIELD

The example and non-limiting embodiments relate generally to scheduling of multiple transport blocks (TB) or physical uplink shared channel (PUSCH) signaling on multiple serving cells and, more particularly, to use of power amplifier information of a UE in such scheduling.

### BACKGROUND

It is known, for single/multiple transport blocks (TB) or single/multiple physical uplink shared channel (PUSCH) signaling, to perform scheduling with a single or multiple downlink control information (DCI).

### SUMMARY

The following summary is merely intended to be illustrative. The summary is not intended to limit the scope of the claims.

In accordance with one aspect, an apparatus comprising: at least one processor; and at least one memory storing instructions that, when executed by the at least one processor, cause the apparatus at least to: receive, from a user equipment, assistance information on power amplifier characteristics of the user equipment, wherein the user equipment is configured to perform multiple uplink transmissions to multiple cells; configure at least one uplink transmission resource, based on the assistance information, for at least one uplink transmission of the multiple uplink transmissions; and transmit, to the user equipment, an indication of a waveform switching configuration related to the at least one uplink transmission resource.

In accordance with one aspect, a method comprising: receiving, with an apparatus from a user equipment, assistance information on power amplifier characteristics of the user equipment, wherein the user equipment is configured to perform multiple uplink transmissions to multiple cells; configuring at least one uplink transmission resource, based on the assistance information, for at least one uplink transmission of the multiple uplink transmissions; and transmitting, to the user equipment, an indication of a waveform switching configuration related to the at least one uplink transmission resource.

In accordance with one aspect, an apparatus comprising means for performing: receiving, from a user equipment, assistance information on power amplifier characteristics of the user equipment, wherein the user equipment is configured to perform multiple uplink transmissions to multiple cells; configuring at least one uplink transmission resource, based on the assistance information, for at least one uplink transmission of the multiple uplink transmissions; and transmitting, to the user equipment, an indication of a waveform switching configuration related to the at least one uplink transmission resource.

In accordance with one aspect, a non-transitory computer-readable medium comprising program instructions stored thereon for performing at least the following: causing receiving, from a user equipment, of assistance information on power amplifier characteristics of the user equipment, wherein the user equipment is configured to perform multiple uplink transmissions to multiple cells; configuring at least one uplink transmission resource, based on the assistance information, for at least one uplink transmission of the multiple uplink transmissions; and causing transmitting, to the user equipment, of an indication of a waveform switching configuration related to the at least one uplink transmission resource.

In accordance with one aspect, a user equipment comprising: at least one processor; and at least one memory storing instructions that, when executed by the at least one processor, cause the user equipment at least to: transmit, to an apparatus, assistance information on power amplifier characteristics of the user equipment, wherein the user equipment is configured to perform multiple uplink transmission to multiple cells; receive, from the apparatus, an indication of a waveform switching configuration related to at least one uplink transmission resource, wherein the waveform switching configuration is based, at least partially, on the assistance information; and transmit, to the network node, at least one uplink transmission using the at least one uplink transmission resource.

In accordance with one aspect, a method comprising: transmitting, with a user equipment to an apparatus, assistance information on power amplifier characteristics of the user equipment, wherein the user equipment is configured to perform multiple uplink transmission to multiple cells; receiving, from the apparatus, an indication of a waveform switching configuration related to at least one uplink transmission resource, wherein the waveform switching configuration is based, at least partially, on the assistance information; and transmitting, to the network node, at least one uplink transmission using the at least one uplink transmission resource.

In accordance with one aspect, a user equipment comprising means for performing: transmitting, to an apparatus, assistance information on power amplifier characteristics of the user equipment, wherein the user equipment is configured to perform multiple uplink transmission to multiple cells; receiving, from the apparatus, an indication of a waveform switching configuration related to at least one uplink transmission resource, wherein the waveform switching configuration is based, at least partially, on the assistance information; and transmitting, to the network node, at least one uplink transmission using the at least one uplink transmission resource.

In accordance with one aspect, a non-transitory computer-readable medium comprising program instructions stored thereon for performing at least the following: causing transmitting, to an apparatus, of assistance information on power amplifier characteristics of the user equipment, wherein the user equipment is configured to perform multiple uplink transmission to multiple cells; causing receiving, from the apparatus, of an indication of a waveform switching configuration related to at least one uplink transmission resource, wherein the waveform switching configuration is based, at least partially, on the assistance information; and causing transmitting, to the network node, of at least one uplink transmission using the at least one uplink transmission resource.

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating features as described herein;
FIG. 3 is a diagram illustrating features as described herein;
FIG. 4 is a diagram illustrating features as described herein;
FIG. 5 is a diagram illustrating features as described herein;
FIG. 6 is a flowchart illustrating steps as described herein;
FIG. 7 is a flowchart illustrating steps as described herein;
FIG. 8 is a flowchart illustrating steps as described herein; and
FIG. 9 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- AMF: access and mobility management function
- CA: carrier aggregation
- CC: component carrier
- CP-OFDM: cyclic prefix orthogonal frequency division multiplexing
- cRAN: cloud radio access network
- CU: central unit
- DC: dual connectivity
- DCI: downlink control information
- DFT-s-OFDM: discrete Fourier transform spread orthogonal frequency division multiplexing
- DU: distributed unit
- DWS: dynamic waveform switching
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- gNB (or gNodeB): base station for 5G/NR, i.e., a node providing NR user plane and control plane protocol terminations towards the UE, and connected via the NG interface to the 5GC
- IBO: input backoff for power amplifier
- I/F: interface
- L1: layer 1
- LO: local oscillator
- LTE: long term evolution
- MAC: medium access control
- MME: mobility management entity
- MPR: maximum power reduction
- ng or NG: new generation
- ng-eNB or NG-eNB: new generation eNB
- NR: new radio
- N/W or NW: network
- OBO: output backoff for power amplifier
- O-RAN: open radio access network
- PA: power amplifier
- PAR or PAPR: peak to average power ratio
- PDCP: packet data convergence protocol
- PHR: power headroom report
- PHY or PL: physical layer
- PRACH: physical random access channel
- PUCCH: physical uplink control channel
- PUSCH: physical uplink shared channel
- RACH: random access channel
- RAN: radio access network
- RF: radio frequency
- RLC: radio link control
- RRC: radio resource control
- RRH: remote radio head
- RS: reference signal
- RU: radio unit
- Rx: receiver
- SDAP: service data adaptation protocol
- SDM: spatial division multiplexing
- SGW: serving gateway
- SMF: session management function
- TB: transport block
- TS: technical specification
- Tx: transmitter
- UE: user equipment (e.g., a wireless, typically mobile device)
- UL: uplink
- UPF: user plane function
- VNR: virtualized network function
- WI: work item
- WF: waveform

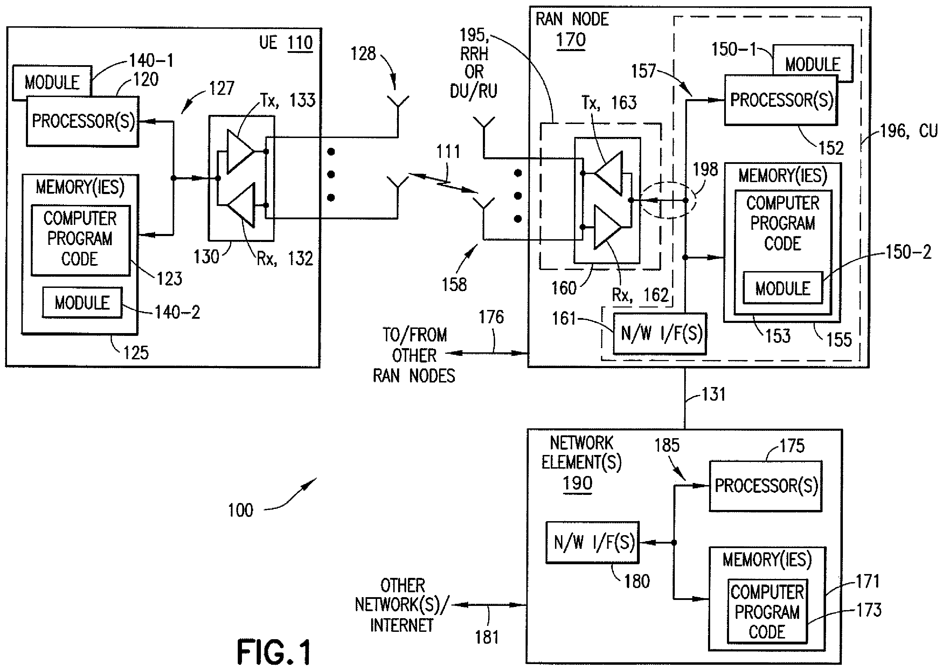

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s), which may implement, for example, E1/F1 interfaces.

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein may generally relate to UL coverage enhancements. The objectives of the Rel-18 work item for UL coverage enhancements are as follows (3GPP RP-213579):
"...Specify following PRACH coverage enhancements (RAN1, RAN2)
   Multiple PRACH transmissions with same beams for 4-step RACH procedure
   Study, and if justified, specify PRACH transmissions with different beams for 4-step RACH procedure
   Note 1: The enhancements of PRACH are targeting for FR2, and can also apply to FR1 when applicable.
   Note 2: The enhancements of PRACH are targeting short PRACH formats, and can also apply to other formats when applicable.
Study and, if necessary, specify following power domain enhancements
   Enhancements to realize increasing UE power high limit for CA and DC based on Rel-17 RAN4 work on "Increasing UE power high limit for CA and DC", in compliance with relevant regulations (RAN4, RAN1)
   Enhancements to reduce MPR/PAR, including frequency domain spectrum shaping with and without spectrum extension for DFT-S-OFDM and tone reservation (RAN4, RAN1)
**Specify enhancements to support dynamic switching between DFT-S-OFDM and CP-OFDM (RANI)..."**

According to the RAN1#112-bis-e FL summary (3GPP R1-2304222), it has been discussed whether/how to support a dynamic switching indication in case a DCI schedules multiple transport blocks (TB). Different cases have been identified for multiple TBs and/or physical uplink shared channel (PUSCH) on multiple serving cells scheduled by a single downlink control information (DCI) (i.e. format 0_X). An indication of dynamic waveform switching (DWS) may be supported for multi-TB or multi-PUSCH in format 0_X, and possibly in multi-carrier AI. One bit or multiple bits may be supported for DWS. In the case of a single bit, there may be a unified solution with a single TB/single DCI; a single bit for DWS switching of a single uplink TB is supported, and a single bit for DWS switching of multi-TB or multi-PUSCH in the time domain in a carrier is supported. Discrete Fourier transform spread orthogonal frequency division multiplexing (DFT-s-OFDM) (i.e. more conservative) or a majority waveform may be used. A single bit may result in less overhead and/or less specification effort.

So far, the focus has been on the completion of the single TB case. For the case of multiple PUSCHs on multiple serving cells scheduled by DCI format 0_X, DWS may or may not be supported. For example, a single DWS bit may indicate a single waveform applicable to multiple serving cells, or multiple bits may be required. However, discussion on supporting DCI format 0_X has been low priority during RAN#112bis-e.

Features as described herein may generally relate to relative power tolerance (e.g. 3GPP TS 38.101-1 v15.5.0, section 6.3.4.3). The relative power tolerance is the ability of the UE transmitter to set its output power in a target sub-frame (1 ms) relative to the power of the most recently transmitted reference sub-frame (1 ms) if the transmission gap between these sub-frames is less than or equal to 20 ms. The minimum requirements specified in Table 6.3.4.3-1 of 3GPP TS 38.101-1, below as TABLE 1, apply when the power of the target and reference sub-frames are within the power range bounded by the minimum output power, as defined in clause 6.3.1, and the measured PUMAX, as defined in clause 6.2.4 of 3GPP TS 38.101-1.

To account for radio frequency (RF) power amplifier (PA) mode changes, 2 exceptions are allowed for each of two test patterns. The test patterns are a monotonically increasing power sweep, and a monotonically decreasing power sweep over a range bounded by the requirements of minimum power and maximum power specified in clauses 6.3.1 and 6.2.1, respectively. For those exceptions, the relative power tolerance limit is a maximum of ± 6.0 dB in Table 6.3.4.3-1: Relative power tolerance, here TABLE 1:

**TABLE 1**

| **Power step ΔP (Up or down) (dB)** | | **All combinations of PUSCH and PUCCH transitions (dB)** | **All combinations of PUSCH/PUCCH and SRS transitions between sub-frames (dB)** | **PRACH (dB)** |
|---|---|---|---|---|
| ΔP < 2 | | ± 2.0 (NOTE) | ± 2.5 | ± 2.0 |
| 2 ≤ ΔP < 3 | | ± 2.5 | ± 3.5 | ± 2.5 |
| 3 ≤ ΔP < 4 | | ± 3.0 | ± 4.5 | ± 3.0 |
| 4 ≤ ΔP < 10 | | ± 3.5 | ± 5.5 | ± 3.5 |
| 10 ≤ ΔP < 15 | | t 4.0 | ± 7.0 | ± 4.0 |
| 15 ≤ ΔP | | ± 5.0 | ± 8.0 | ± 5.0 |
| NOTE: | For PUSCH to PUSCH transitions with the allocated resource blocks fixed in frequency and no transmission gaps other than those generated by downlink subframes, DwPTS fields or Guard Periods: for a power step ΔP ≤ 1 dB, the relative power tolerance for transmission is ± 0.7 dB. | | | |

Features as described herein may generally relate to the UE DualPA capability. The dualPA-Architecture capability for dual connectivity and carrier aggregation is defined in 3GPP TS 38.306 V17.4.0, sections 4.2.7.4, 4.2.7.9 as follows:
**"...For band combinations with single band with UL CA, this field indicates the support of dual PA and dual LO frequencies for FR1, or dual LO frequencies for FR2.** If absent in such band combinations, the UE supports single PA and single LO frequency for all the ULs for FR1, or single LO frequency for all the ULs for FR2. For other band combinations, this field is not applicable.
**For an intra-band combination, this field indicates the support of dual PAs.** If absent in an intra-band combination, the UE supports single PA for all the ULs in the intra-band combination. For other band combinations, this field is not applicable.
This capability applies to:
   - Intra-band (NG)EN-DC/NE-DC combination without additional inter-band NR and LTE CA component.
   - Intra-band (NG)EN-DC/NE-DC combination supporting both UL and DL intra-band (NG)EN-DC/NE-DC parts with additional inter-band NR/LTE CA component.
   - Inter-band (NG)EN-DC/NE-DC combination, where the frequency range of the E-UTRA band is a subset of the frequency range of the NR band (as specified in Table 5.5B.4.1-1 of TS 38.101-3 [4]).
If this capability is included in an "Intra-band (NG)EN-DC/NE-DC combination supporting both UL and DL intra-band (NG)EN-DC/NE-DC parts with additional inter-band NR/LTE CA component", this capability applies to the intra-band (NG) EN-DC/NE-DC BC part..."

During RAN1#112bis-e, the dynamic switching between DFT-s-OFDM and CP-OFDM for multi-PUSCH in the multi-serving cells scenario was proposed. It should be noted that different PUSCHs may be transmitted to different cells and may have various channel conditions and/or path losses, making it clear that a UE may have poor coverage for one cell and good coverage for another.

A different waveform (WF) may be employed with PUSCH transmissions across multiple cells, and thus the UE may only partially take advantage (if any) of the DFT-s-OFDM when followed by CP-OFDM transmission to a different cell, or when it is frequency multiplexed in a band sharing the same PA. Note that the PA usually serves a wide bandwidth covering different component carriers (CC), and the mixed signal (DFT-s-OFDM and CP-OFDM) of multi-PUSCH overlapped in time-domain may eventually limit the achievable maximum power reduction (MPR) and, thus, the coverage enhancement.

One of the main factors affecting also this issue is whether the transmission gap for these PUSCH transmissions for multiple cells is less than or equal to 20 ms when they share the same PA (i.e. time or frequency multiplexed). The relative power tolerance in the specifications considers only monotonic power sweeping while defining the relative power tolerance values in Table 6.3.4.3-1 (TABLE 1) to account for RF power amplifier mode changes, even with the same waveform having the same input backoff for power amplifier (IBO) and/or output backoff for power amplifier (OBO) for PA. Therefore, non-monotonic power sweeping for UL transmissions with multiple cells may result in smaller tolerance values (e.g. a wider gap between power step deltaP and relative tolerance) or allow more than the two current exceptions for UE implementation considered with the monotonic sweep. This may reduce the appropriateness of DWS to DFT-s-OFDM for some cells.

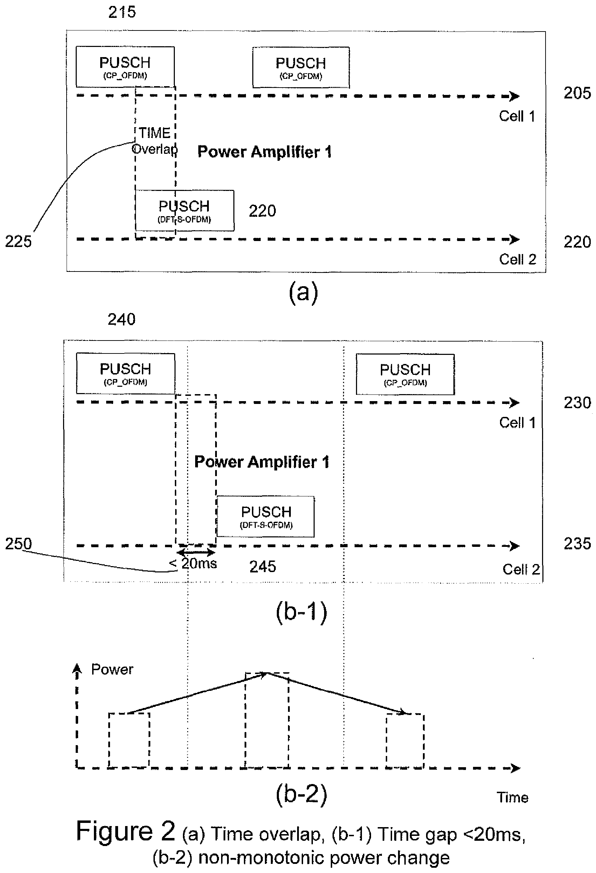

Referring now to FIG. 2, illustrated are examples of the issues with dynamic switching between DFT-s-OFDM and CP-OFDM to multi-PUSCH in the multi-serving cell scenario. FIG. 2(a) illustrates an example of time overlap. FIG. 2(b-1) illustrates an example of time gap less than 20 ms. FIG. 2(b-2) illustrates an example of non-monotonic power change with a time gap of less than 20ms. It may be noted that non-monotonic power change may not be an issue for a larger time gap between PUSCH, for example more than 20ms. The examples of FIG. 2 include a single power amplifier serving the two cells, whereas if the UE uses a different power amplifier for each cell, the problems mentioned above may not exist, since each PA may have a different time gap of 20ms for power tolerance. Recalling that a single PA usually may serve more than one carrier and has a wide bandwidth, the described issue may be common even for different CCs within PA bandwidth (e.g. BW of PA may be up to multi-GHz). In FIG. 2, the horizontal axis represents time. In FIG. 2(b-2) there is a power (vertical) axis that illustrates the power variation of the different cell's PUSCHs over time where the time gap between consecutive PUSCH for different cells is smaller than 20ms.

In FIG. 2(a), multi-PUSCHs serving two different cells (205, 210) are presented. One PUSCH for cell 1 (e.g. 215) and one PUSCH for cell 2 (e.g. 220) overlap for some time (225), which may limit the efficiency of the PA since the time slot contains partially a combination of two WFs (DFT-s-OFDM and CP-OFDM) and the MPR may be limited by the worse waveform of highest peak to average power ratio (PAPR).

In FIG. 2(b-1), multi-PUSCHs serving two cells (230, 235) with a time gap of less than 20 ms (250) between PUSCH (240, 245) are presented. FIG. 2(b-2) shows the power change in a non-monotonic way, which may lead to smaller relative power tolerance values.

It may be recalled that the maximum relative power tolerance with monotonic power sweep is +/- 6dB for deltaP>=15dB, and this maximum value may already be used by closed loop power control due to different PL with the cells. Hence, this non-monotonic power sweep may be reducing this relative power tolerance, and thus reducing the coverage if the power boost after a DWS to DFT-s-OFDM cannot be achieved within this new tolerance.

For example, if the UE transmit output power for cell 1 *P*_{*cell_*1} = X dB and the UE transmit output power for cell 2 *P*_{*cell_*2} = X+6dB, DWS to DFT-s-OFDM for cell 2 may not allow any power boost if the time gap is smaller than 20ms since the maximum relative power tolerance of 6dB is already used.

If *P*_{*cell_*2} = X+4.5 dB with a time gap <20ms and the monotonic power sweep is maintained, then the new *P*_{*cell_*2} may be increased up to X+6dB (i.e. DWS to DFT-s-OFDM may be useful). Else, if the power among multi-PUSCH is non-monotonic and the corresponding maximum relative power tolerance is reduced to 3dB, for example (i.e. *P*_{*cell_*2*_max*} = X+3 dB), then this may lead to worse coverage.

In example embodiments of the present disclosure, the gNB may be aided in determining the appropriateness of DWS in the situation of multi-PUSCH transmission in multi-cell where these multi-PUSCH transmissions share the same PA and are within the 20ms time gap. In an example embodiment, more details about UE PA architecture (e.g. assistance information) may be indicated to assist the gNB in determining DWS appropriateness, and/or to help the gNB to take advantage of DWS, for example by moving (i.e. re-scheduling) one or more PUSCH transmissions to another time, frequency, and/or spatial resource(s), and/or by using another PA. A technical effect of example embodiments of the present disclosure may be to enable maintenance of monotonic power sweep among different PUSCH.

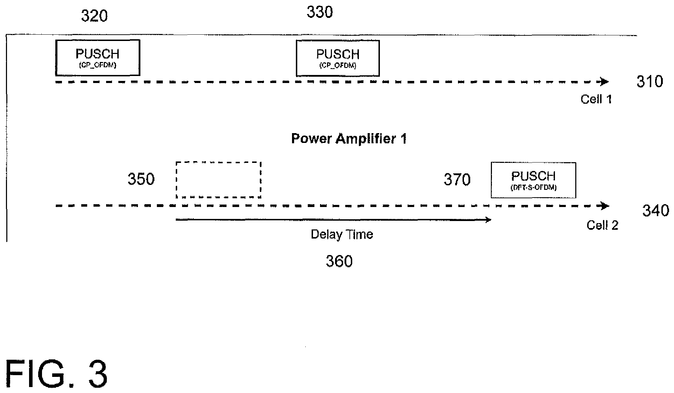

In an example embodiment, in a first option, a UE may suggest, and a gNB may decide to avoid, the scenarios presented in FIG. 2(a), (b-1), (b-2) by delaying one or multiple PUSCH transmissions sharing a same PA for one or multiple cells. A technical effect of example embodiments of the present disclosure may be to avoid the 20ms power tolerance rule and/or to achieve a monotonic power sweep (FIG. 3), for example by using an offset. This offset indication for one or multiple cells may be defined as a relative time corresponding to the last PUSCH transmission received by, or transmitted to, the same cell. Such an offset may allow an immediate scheduling adaptation by this cell in a decentralized manner. Alternatively, the offset indication may be relative to a last UE-transmitted PUSCH; in this case, a centralized gNB decision to adjust the scheduling for the multi-PUSCHs to different cells may be made. It may be noted that the gNB may abandon the power boost (power tolerance) or DWS by not applying the time delay due to some latency constraints.

Referring now to FIG. 3, illustrated is an example of time rescheduling, for example according to option 1. A PUSCH transmission (350) to cell 2 (340) may be delayed to a different time (370) to avoid the 20ms rule with respect to PUSCH transmission(s) (320, 330) to cell 1 (310).

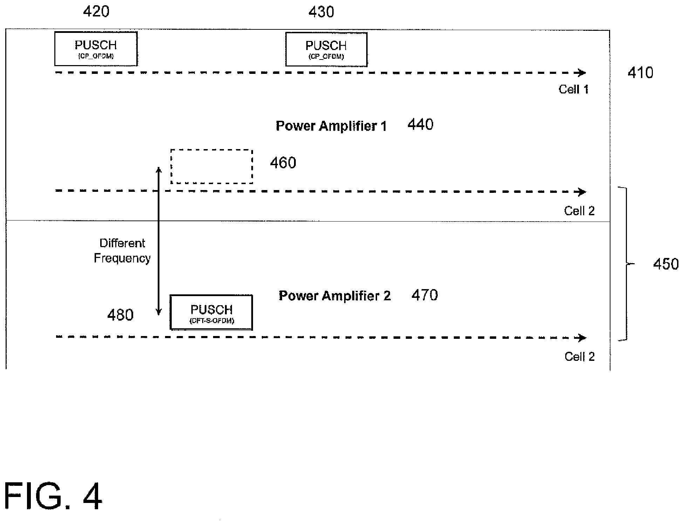

In an example embodiment, in a second option, a UE may suggest, and a gNB may decide to avoid, the scenarios presented in FIG. 2 (a), (b-1), (b-2) by scheduling one or multiple PUSCH transmissions from one or multiple cells to different frequencies, where these frequencies may be supported by another amplifier (see FIG. 4), or their offset may have the technical effect of getting a better MPR with DFT-s-OFDM. This offset indication for one or multiple cell(s) may be defined as a relative frequency offset corresponding to the last PUSCH transmission received by, or transmitted to, the same cell.

Referring now to FIG. 4, illustrated is an example of frequency rescheduling. A PUSCH (460) in cell 2 (450) may be moved to a different frequency (480) to avoid PUSCH (420, 430) to cell 1 (410). This may involve a change from use of power amplifier 1 (440) to use of power amplifier 2 (470).

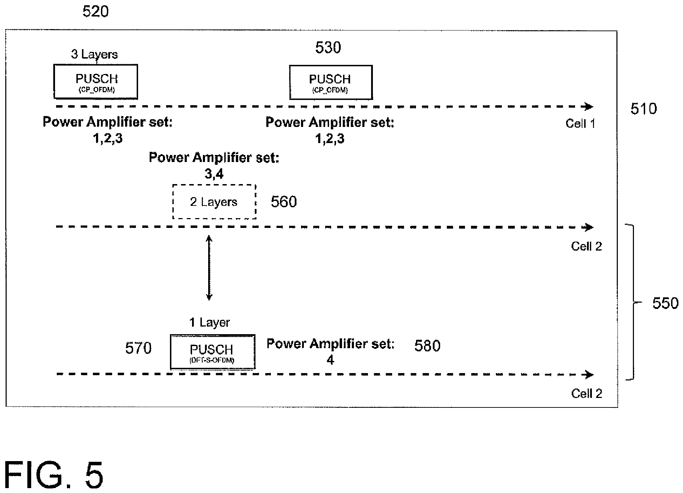

In an example embodiment, in a third option, for UEs supporting multi-layers transmission (e.g. Rel-18 UE with simultaneous multi-panel UL transmission capability), a UE may suggest, or a gNB may decide, to change from one PA layer (PA corresponding to each UL transmission layer combination) to another to avoid the scenarios presented in FIG. 2 (a), (b-1), (b-2). One constraint may be that if the UE only supports a number X of layers simultaneously, the sum of layers for all different cells should be lower or equal to X (e.g., FIG. 5 shows an example with a maximum number X equal to four).

Referring now to FIG. 5, illustrated is an example of different layers with different power amplifiers, where each layer may be served with one amplifier. A PUSCH transmission (560) in cell 2 (550) may be changed from 2 layers (560) to be transmitted with power amplifiers that are different from the power amplifiers used by the PUSCH transmission(s) (520, 530) in cell 1, where the maximum number of layers that can be served at the same time by the UE is equal to four. For example, the PUSCH transmission in cell 2 may be changed from transmission with 2 layers with power amplifier set 3, 4 to 1 layer (570) transmitted with power amplifier set 4 (580) to avoid PUSCH transmission(s) (520, 530) to cell 1 (510) transmitted with 3 layers using power amplifier set 1, 2, 3. In this example, PUSCH 530 is a CP-OFDM with 3 layers using 3 PA sets (i.e. at least one PA per layer), and 560, with 2 layers, is reduced to 1 layer after DWS to use the last available PA set with simultaneous transmissions (i.e. power amplifier set 4 (580)).

In an example embodiment, in a fourth option, a UE may indicate to a gNB its capability, for example the duration needed to achieve a target delta-power (e.g. may be pre-defined or indicated by the UE to the gNB earlier) considering a non-monotonic power sweep or a minimum duration. The UE may request that the gNB keep the same WF (especially for DFT-S-OFDM) to avoid constant WF switching and to achieve a target power progressively after DWS. In summary, the UE may indicate to the gNB the duration needed to achieve a target delta-Power (or vice versa: achievable power with a target duration) even with non-monotonic power sweep so that the gNB scheduler may consider this time duration while scheduling multi-PUSCH. The UE indication of the achievable delta-power may be included in a power headroom report (PHR), where a new PHR equation may add a variable to provide an implicit indication of the achievable power, if necessary. In addition, the PHR determination may consider the achievable power for a pre-defined/determined duration that may be smaller than 20 ms (e.g. a duration pre-defined in specifications, indicated by gNB, the PHR periodic timer, or the smallest/average/largest time gap between consecutive configured PUSCH, etc.).

In an example embodiment, in a fifth option, a UE may indicate a number of cells or a number of frequency ranges of a serving cell or a number of carriers of a serving cell that may need to be scheduled with same waveform (e.g. if the time gap is smaller than 20ms) using a bitmap, for example according to its PA implementation. Frequency ranges or cells associated with the same binary value may be associated with the same PA. In other words, a bitmap may indicate which cells, CCs, or other resources are sharing a common PA. For example, the UE may indicate a bitmap of [1 1 0] for the scenario in FIG. 5 (e.g. for [cell 1, cell 2, cell 3]), indicating that the UE may use the same PA for cell 1 and cell 2, but not with cell 3. Accordingly, cell3 may use any WF, regardless of cell 1/2, while cell 1/2 may need to carefully consider their WFs according to their allocation/configuration and power difference. This assistance information may help the gNB to make the best use of DWS.

It may be noted that most proposed indication discussed above propose, implicitly or explicitly, moving one or more PUSCH transmissions as indicated by the UE, which may have the technical effect of getting a DWS advantage after the re-scheduling. These options may be used even if the UEs do not want to disclose more information about its PA architecture than dualPA architecture. Other proposed indications (e.g. bitmap) may be used to schedule all PUSCH transmissions for multiple cells from the first transmission according to a well-detailed report about UE PA architecture.

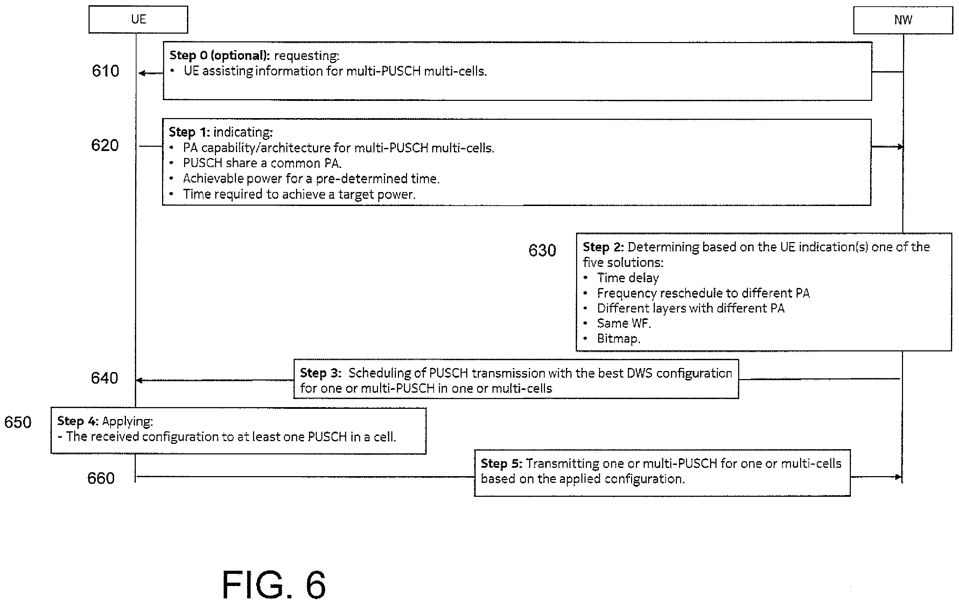

Referring now to FIG. 6, illustrated is a network-centric example embodiment of the present disclosure. At 610, the network may, optionally, request the UE to provide assistance information (PA capability, architecture, etc.) for multi-PUSCH multi-cells. At 620, the UE may determine and/or indicate UE capability(ies) or other assistance information concerning multiple PUSCH transmissions in multiple cells. The UE may indicate its PA capability, or architecture, or whether one or more PUSCH share a common PA, or the achievable power for a pre-determined time, or the time required to achieve a target power. At 630, the NW may receive the UE indication(s) and determine which option is best for the DWS for multi-PUSCH multi-cells to achieve the target power after DWS by UE hardware, if PA is shared among at least two PUSCH. For example, the NW may choose to perform one of: time delay, frequency scheduling to a different PA, use of different layers with a different PA, retention of WF, and/or use of a bitmap depending on UE PA architecture with respect to a set of resources or cells. If the UE supports only one PA, the gNB may choose an appropriate course of action, transmission modification, or characteristic of/for a (D)WS configuration; these terms may be used interchangeably in the present disclosure to refer to, for example, options 1-5 above. If the UE supports multiple PA, the gNB may consider a characteristic for a waveform switching configuration when it is helpful, even within the same PA (e.g. to achieve a 20ms gap for non-monotonic power sweep or a large deltaPower>+/-6dB) .

At 640, the NW may schedule one or multi-PUSCH transmission(s) based on the determined characteristic of the waveform switching configuration for one or multiple cells. For example, the PUSCH transmission(s) may be scheduled based on a DWS configuration determined to be best (e.g. based on one or more metrics) for one or multi-PUSCH in one or multi-cells. At 650, the UE may apply the waveform switching configuration for one PUSCH transmission or multiple PUSCH transmissions for one or multiple cells for the following UL configured transmissions. In other words, the received configuration may be applied for at least one PUSCH to a cell . At 670, the UE may transmit one or multi-PUSCH for one or multi-cells based on the applied configuration.

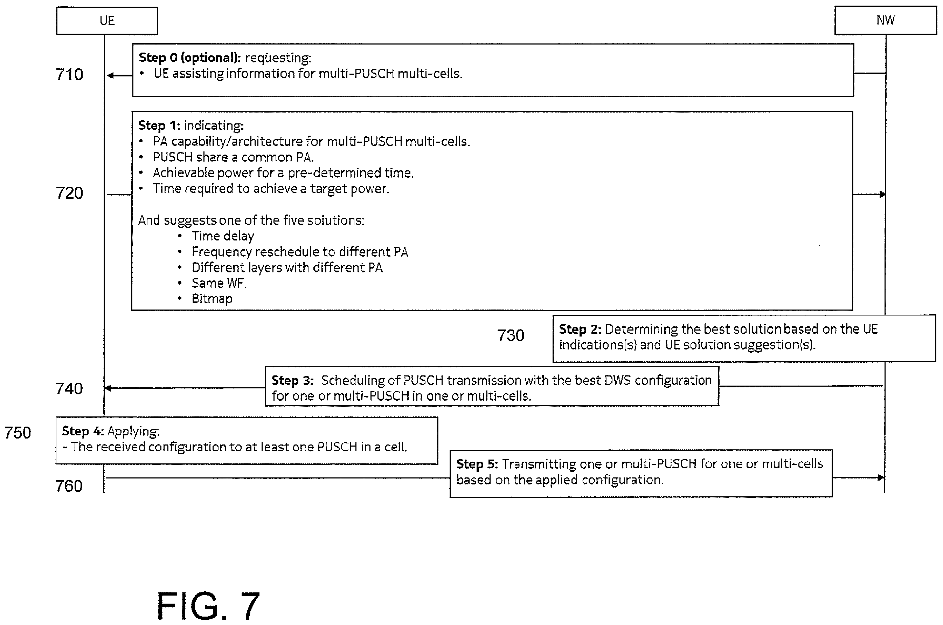

Referring now to FIG. 7, illustrated is a UE-centric example embodiment of the present disclosure. At 710, the NW may, optionally, request the UE to provide assistance information (PA capability, architecture, etc.) for multi-PUSCH multi-cells. At 720, the UE may determine and/or indicate UE capability or assistance information concerning multi-PUSCH multi-cells and/or scheduling hint/recommendation to help the gNB in moving/scheduling one or more PUSCH at a different time/frequency or spatial resources. The UE may indicate whether PUSCH transmissions share a common PA. The UE may indicate achievable power within a pre-determined time. The UE may indicate the time required to achieve a target power. The UE may indicate/suggest to the NW which of the options (e.g. waveform switching configuration) is best or preferred. For example, the UE may suggest one of time delay, frequency scheduling to a different PA, use of different layers with a different PA, retention of WF, and/or use of a bitmap. For example, based on the number of supported PAs, the UE may select/suggest the best course (s) of action. At 730, the NW may receive the indication(s) and/or the UE suggestion(s) (e.g., time/frequency offset, or number of layer adjustment to fit UE capability when UE suggests multi-PUSCH with SDM) . The NW may determine the best or preferred waveform switching configuration based on the UE indication(s) and/or a characteristic for a waveform configuration suggested by the UE.

At 740, the NW may schedule one or multi-PUSCH transmission(s) based on one of the UE suggestion(s) for one or multi-cells. At 750, the UE may apply the configured waveform for one PUSCH or multi-PUSCH for one or multi-cells for the following UL configured transmissions. For example, the UE may apply the received configuration for at least one PUSCH in a cell. At 760, the UE may transmit one or multi-PUSCH for one or multi-cells based on the applied configuration.

A technical effect of example embodiments of the present disclosure may be to ensure that DWS to DFT-s-OFDM with back-to-back (i.e. within a short time duration, for example 20 ms) PUSCH in the multi-PUSCH multi-cells scenario may achieve the necessary power adaption by UE and, as a result, the coverage increase for one or more cells (or all).

A technical effect of example embodiments of the present disclosure may be to avoid using useless DWS in one or more cells where the desired coverage enhancement cannot be achieved.

A technical effect of example embodiments of the present disclosure may be to provide means for the scheduler to help the gNB take advantage of DWS.

In an example embodiment, assistance information may include the required time to reach a target deltaPower offset, mainly within 21ms and non-monotonic power seep. Additionally or alternatively, assistance information may include an achievable deltaPower within a pre-defined time. Additionally or alternatively, assistance information may include time/frequency/spatial resources re-configuration (e.g., offset or change nb of layers) or other re-configuration request. Additionally or alternatively, assistance information may include DWS to specific waveform for at least one cell, or indication of the supported number of PAs or a bitmap of PAs according to cells/frequencies/CCs/bands/etc. Assistance information may be based on UE PA architecture and PA(s) capability(ies).

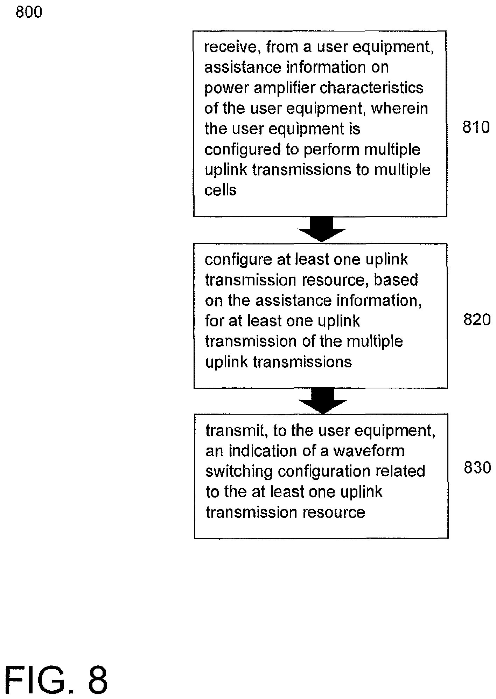

FIG. 8 illustrates the potential steps of an example method 800. The example method 800 may include: receiving, from a user equipment, assistance information on power amplifier characteristics of the user equipment, wherein the user equipment is configured to perform multiple uplink transmissions to multiple cells, 810; configuring at least one uplink transmission resource, based on the assistance information, for at least one uplink transmission of the multiple uplink transmissions, 820; and transmitting, to the user equipment, an indication of a waveform switching configuration related to the at least one uplink transmission resource, 830. The example method 800 may be performed, for example, with an apparatus, network node, gNB, base station, etc.

In an example embodiment, the assistance information received at 810 may not necessarily be assistance information on power amplifier characteristics of the user equipment, but rather assistance information for making a decision on DWS.

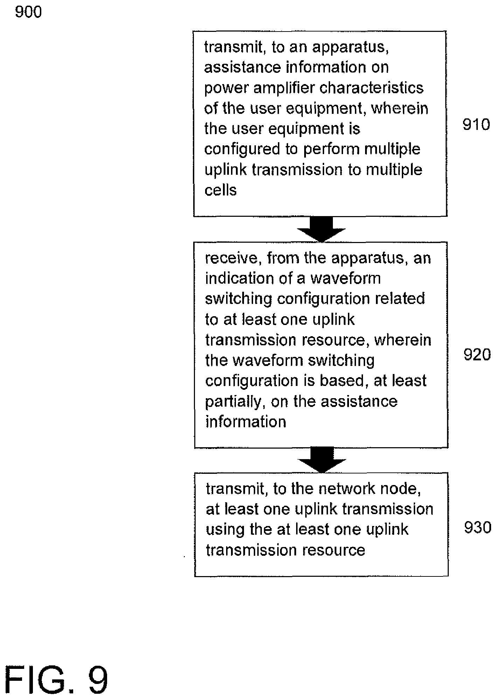

FIG. 9 illustrates the potential steps of an example method 900. The example method 900 may include: transmitting, to an apparatus, assistance information on power amplifier characteristics of the user equipment, wherein the user equipment is configured to perform multiple uplink transmission to multiple cells, 910; receiving, from the apparatus, an indication of a waveform switching configuration related to at least one uplink transmission resource, wherein the waveform switching configuration is based, at least partially, on the assistance information, 920; and transmit, to the network node, at least one uplink transmission using the at least one uplink transmission resource.

In an example embodiment, the assistance information transmitted at 910 may not necessarily be assistance information on power amplifier characteristics of the user equipment, but rather assistance information for making a decision on DWS.

In accordance with one example embodiment, an apparatus may comprise: at least one processor; and at least one memory storing instructions that, when executed by the at least one processor, cause the apparatus at least to: receive, from a user equipment, assistance information on power amplifier characteristics of the user equipment, wherein the user equipment may be configured to perform multiple uplink transmissions to multiple cells; configure at least one uplink transmission resource, based on the assistance information, for at least one uplink transmission of the multiple uplink transmissions; and transmit, to the user equipment, an indication of a waveform switching configuration related to the at least one uplink transmission resource.

The assistance information may comprise at least one of: a power amplifier capability of the user equipment, an indication of whether the user equipment is configured to perform multiple uplink transmissions with at least one common power amplifier, an indication of an output power achievable with the user equipment in a predetermined time, or an indication of a time in which a predetermined output power is achievable with the user equipment.

At least one of the indication of the output power achievable with the user equipment in the predetermined time, or the indication of the time in which the predetermined output power is achievable with the user equipment, may be provided via a power headroom report.

The assistance information may comprise at least one of: information identifying a relative time offset associated with at least one power amplifier of the user equipment, information identifying a relative frequency offset associated with the at least one power amplifier of the user equipment, information identifying a number of layers associated with the at least one power amplifier of the user equipment, or information identifying a power amplifier architecture associated with the user equipment.

The indication of the waveform switching configuration may comprise at least one of: a configuration of at least one time resource for the at least one uplink transmission, a configuration of at least one frequency resource for the at least one uplink transmission, a configuration of at least one spatial resource for the at least one uplink transmission, a configuration of at least one power amplifier for the at least one uplink transmission, a configuration of at least one layer for the at least one uplink transmission, a configuration of a waveform for the at least one uplink transmission, or a bitmap associated with the waveform for the at least one uplink transmission.

The configuration of the at least one time resource for the at least one uplink transmission may comprise an offset with respect to a time corresponding to a last physical uplink shared channel transmission to a cell.

The configuration of the at least one frequency resource for the at least one uplink transmission may comprise an offset with respect to a frequency corresponding to a last physical uplink shared channel transmission to a cell.

The offset may comprise an offset relative to at least one of: the cell, or a cell corresponding to a last physical uplink shared channel transmission from the user equipment.

Respective bits of the bitmap may be configured to indicate at least one of: a respective cell for the at least one uplink transmission, a respective frequency range of a serving cell for the at least one uplink transmission, or a carrier of the serving cell for the at least one uplink transmission.

The assistance information may further comprise an indication of one or more suggested characteristics for the waveform switching configuration, wherein the one or more suggested characteristics may comprise at least one of: a configuration of at least one time resource for the at least one uplink transmission, a configuration of at least one frequency resource for the at least one uplink transmission, a configuration of at least one spatial resource for the at least one uplink transmission, a configuration of at least one power amplifier for the at least one uplink transmission, the at least one power amplifier for the at least one uplink transmission, a configuration of at least one layer for the at least one uplink transmission, a configuration of a waveform for the at least one uplink transmission, or a bitmap associated with the waveform for the at least one uplink transmission.

The example apparatus may be further configured to: transmit, to the user equipment, a request for the assistance information.

In accordance with one aspect, an example method may be provided comprising: receiving, with an apparatus from a user equipment, assistance information on power amplifier characteristics of the user equipment, wherein the user equipment may be configured to perform multiple uplink transmissions to multiple cells; configuring at least one uplink transmission resource, based on the assistance information, for at least one uplink transmission of the multiple uplink transmissions; and transmitting, to the user equipment, an indication of a waveform switching configuration related to the at least one uplink transmission resource.

The assistance information may comprise at least one of: a power amplifier capability of the user equipment, an indication of whether the user equipment is configured to perform multiple uplink transmissions with at least one common power amplifier, an indication of an output power achievable with the user equipment in a predetermined time, or an indication of a time in which a predetermined output power is achievable with the user equipment.

At least one of the indication of the output power achievable with the user equipment in the predetermined time, or the indication of the time in which the predetermined output power is achievable with the user equipment, may be provided via a power headroom report.

The assistance information may comprise at least one of: information identifying a relative time offset associated with at least one power amplifier of the user equipment, information identifying a relative frequency offset associated with the at least one power amplifier of the user equipment, information identifying a number of layers associated with the at least one power amplifier of the user equipment, or information identifying a power amplifier architecture associated with the user equipment.

The indication of the waveform switching configuration may comprise at least one of: a configuration of at least one time resource for the at least one uplink transmission, a configuration of at least one frequency resource for the at least one uplink transmission, a configuration of at least one spatial resource for the at least one uplink transmission, a configuration of at least one power amplifier for the at least one uplink transmission, a configuration of at least one layer for the at least one uplink transmission, a configuration of a waveform for the at least one uplink transmission, or a bitmap associated with the waveform for the at least one uplink transmission.

The configuration of the at least one time resource for the at least one uplink transmission may comprise an offset with respect to a time corresponding to a last physical uplink shared channel transmission to a cell.

The configuration of the at least one frequency resource for the at least one uplink transmission may comprise an offset with respect to a frequency corresponding to a last physical uplink shared channel transmission to a cell.

The offset may comprise an offset relative to at least one of: the cell, or a cell corresponding to a last physical uplink shared channel transmission from the user equipment.

Respective bits of the bitmap may be configured to indicate at least one of: a respective cell for the at least one uplink transmission, a respective frequency range of a serving cell for the at least one uplink transmission, or a carrier of the serving cell for the at least one uplink transmission.

The assistance information may further comprise an indication of one or more suggested characteristics for the waveform switching configuration, wherein the one or more suggested characteristics may comprise at least one of: a configuration of at least one time resource for the at least one uplink transmission, a configuration of at least one frequency resource for the at least one uplink transmission, a configuration of at least one spatial resource for the at least one uplink transmission, a configuration of at least one power amplifier for the at least one uplink transmission, the at least one power amplifier for the at least one uplink transmission, a configuration of at least one layer for the at least one uplink transmission, a configuration of a waveform for the at least one uplink transmission, or a bitmap associated with the waveform for the at least one uplink transmission.

The example method may further comprise: transmitting, to the user equipment, a request for the assistance information.

In accordance with one example embodiment, an apparatus may comprise: circuitry configured to perform: receiving, from a user equipment, assistance information on power amplifier characteristics of the user equipment, wherein the user equipment may be configured to perform multiple uplink transmissions to multiple cells; circuitry configured to perform: configuring at least one uplink transmission resource, based on the assistance information, for at least one uplink transmission of the multiple uplink transmissions; and circuitry configured to perform: transmitting, to the user equipment, an indication of a waveform switching configuration related to the at least one uplink transmission resource.

In accordance with one example embodiment, an apparatus may comprise: processing circuitry; memory circuitry including computer program code, the memory circuitry and the computer program code configured to, with the processing circuitry, enable the apparatus to: receive, from a user equipment, assistance information on power amplifier characteristics of the user equipment, wherein the user equipment may be configured to perform multiple uplink transmissions to multiple cells; configure at least one uplink transmission resource, based on the assistance information, for at least one uplink transmission of the multiple uplink transmissions; and transmit, to the user equipment, an indication of a waveform switching configuration related to the at least one uplink transmission resource.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing: receiving, from a user equipment, assistance information on power amplifier characteristics of the user equipment, wherein the user equipment may be configured to perform multiple uplink transmissions to multiple cells; configuring at least one uplink transmission resource, based on the assistance information, for at least one uplink transmission of the multiple uplink transmissions; and transmitting, to the user equipment, an indication of a waveform switching configuration related to the at least one uplink transmission resource.

The assistance information may comprise at least one of: a power amplifier capability of the user equipment, an indication of whether the user equipment is configured to perform multiple uplink transmissions with at least one common power amplifier, an indication of an output power achievable with the user equipment in a predetermined time, or an indication of a time in which a predetermined output power is achievable with the user equipment.

At least one of the indication of the output power achievable with the user equipment in the predetermined time, or the indication of the time in which the predetermined output power is achievable with the user equipment, may be provided via a power headroom report.

The assistance information may comprise at least one of: information identifying a relative time offset associated with at least one power amplifier of the user equipment, information identifying a relative frequency offset associated with the at least one power amplifier of the user equipment, information identifying a number of layers associated with the at least one power amplifier of the user equipment, or information identifying a power amplifier architecture associated with the user equipment.

The indication of the waveform switching configuration may comprise at least one of: a configuration of at least one time resource for the at least one uplink transmission, a configuration of at least one frequency resource for the at least one uplink transmission, a configuration of at least one spatial resource for the at least one uplink transmission, a configuration of at least one power amplifier for the at least one uplink transmission, a configuration of at least one layer for the at least one uplink transmission, a configuration of a waveform for the at least one uplink transmission, or a bitmap associated with the waveform for the at least one uplink transmission.

The configuration of the at least one time resource for the at least one uplink transmission may comprise an offset with respect to a time corresponding to a last physical uplink shared channel transmission to a cell.

The configuration of the at least one frequency resource for the at least one uplink transmission may comprise an offset with respect to a frequency corresponding to a last physical uplink shared channel transmission to a cell.

The offset may comprise an offset relative to at least one of: the cell, or a cell corresponding to a last physical uplink shared channel transmission from the user equipment.

Respective bits of the bitmap may be configured to indicate at least one of: a respective cell for the at least one uplink transmission, a respective frequency range of a serving cell for the at least one uplink transmission, or a carrier of the serving cell for the at least one uplink transmission.

The assistance information may further comprise an indication of one or more suggested characteristics for the waveform switching configuration, wherein the one or more suggested characteristics may comprise at least one of: a configuration of at least one time resource for the at least one uplink transmission, a configuration of at least one frequency resource for the at least one uplink transmission, a configuration of at least one spatial resource for the at least one uplink transmission, a configuration of at least one power amplifier for the at least one uplink transmission, the at least one power amplifier for the at least one uplink transmission, a configuration of at least one layer for the at least one uplink transmission, a configuration of a waveform for the at least one uplink transmission, or a bitmap associated with the waveform for the at least one uplink transmission.

The means may be further configured to perform: transmitting, to the user equipment, a request for the assistance information.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: cause receiving, from a user equipment, of assistance information on power amplifier characteristics of the user equipment, wherein the user equipment may be configured to perform multiple uplink transmissions to multiple cells; configure at least one uplink transmission resource, based on the assistance information, for at least one uplink transmission of the multiple uplink transmissions; and cause transmitting, to the user equipment, of an indication of a waveform switching configuration related to the at least one uplink transmission resource.

In accordance with one example embodiment, a non-transitory computer-readable medium comprising program instructions stored thereon for performing at least the following: causing receiving, from a user equipment, of assistance information on power amplifier characteristics of the user equipment, wherein the user equipment may be configured to perform multiple uplink transmissions to multiple cells; configuring at least one uplink transmission resource, based on the assistance information, for at least one uplink transmission of the multiple uplink transmissions; and causing transmitting, to the user equipment, of an indication of a waveform switching configuration related to the at least one uplink transmission resource.

In accordance with another example embodiment, a non-transitory program storage device readable by a machine may be provided, tangibly embodying instructions executable by the machine for performing operations, the operations comprising: causing receiving, from a user equipment, of assistance information on power amplifier characteristics of the user equipment, wherein the user equipment may be configured to perform multiple uplink transmissions to multiple cells; configuring at least one uplink transmission resource, based on the assistance information, for at least one uplink transmission of the multiple uplink transmissions; and causing transmitting, to the user equipment, of an indication of a waveform switching configuration related to the at least one uplink transmission resource.

In accordance with another example embodiment, a non-transitory computer-readable medium comprising instructions that, when executed by an apparatus, cause the apparatus to perform at least the following: causing receiving, from a user equipment, of assistance information on power amplifier characteristics of the user equipment, wherein the user equipment may be configured to perform multiple uplink transmissions to multiple cells; configuring at least one uplink transmission resource, based on the assistance information, for at least one uplink transmission of the multiple uplink transmissions; and causing transmitting, to the user equipment, of an indication of a waveform switching configuration related to the at least one uplink transmission resource.

A computer implemented system comprising: at least one processor and at least one non-transitory memory storing instructions that, when executed by the at least one processor, cause the system at least to perform: causing receiving, from a user equipment, of assistance information on power amplifier characteristics of the user equipment, wherein the user equipment may be configured to perform multiple uplink transmissions to multiple cells; configuring at least one uplink transmission resource, based on the assistance information, for at least one uplink transmission of the multiple uplink transmissions; and causing transmitting, to the user equipment, of an indication of a waveform switching configuration related to the at least one uplink transmission resource.

A computer implemented system comprising: means for causing receiving, from a user equipment, of assistance information on power amplifier characteristics of the user equipment, wherein the user equipment may be configured to perform multiple uplink transmissions to multiple cells; means for configuring at least one uplink transmission resource, based on the assistance information, for at least one uplink transmission of the multiple uplink transmissions; and means for causing transmitting, to the user equipment, of an indication of a waveform switching configuration related to the at least one uplink transmission resource.

In accordance with one example embodiment, an apparatus may comprise: at least one processor; and at least one memory storing instructions that, when executed by the at least one processor, cause the apparatus at least to: transmit, to an apparatus, assistance information on power amplifier characteristics of the user equipment, wherein the user equipment may be configured to perform multiple uplink transmission to multiple cells; receive, from the apparatus, an indication of a waveform switching configuration related to at least one uplink transmission resource, wherein the waveform switching configuration may be based, at least partially, on the assistance information; and transmit, to the network node, at least one uplink transmission using the at least one uplink transmission resource.

The assistance information may comprise at least one of: a power amplifier capability of the user equipment, an indication of whether the user equipment is configured to perform multiple uplink transmissions with at least one common power amplifier, an indication of an output power achievable with the user equipment in a predetermined time, or an indication of a time in which a predetermined output power is achievable with the user equipment.

At least one of the indication of the output power achievable with the user equipment in the predetermined time, or the indication of the time in which the predetermined output power is achievable with the user equipment, may be provided via a power headroom report.

The assistance information may comprise at least one of: information identifying a relative time offset associated with at least one power amplifier of the user equipment, information identifying a relative frequency offset associated with the at least one power amplifier of the user equipment, information identifying a number of layers associated with the at least one power amplifier of the user equipment, or information identifying a power amplifier architecture associated with the user equipment.

The assistance information may further comprise an indication of one or more suggested characteristics for the waveform switching configuration, wherein the one or more suggested characteristics may comprise at least one of: a configuration of at least one time resource for the at least one uplink transmission, a configuration of at least one frequency resource for the at least one uplink transmission, a configuration of at least one spatial resource for the at least one uplink transmission, a configuration of at least one power amplifier for the at least one uplink transmission, the at least one power amplifier for the at least one uplink transmission, a configuration of at least one layer for the at least one uplink transmission, a configuration of a waveform for the at least one uplink transmission, or a bitmap associated with the waveform for the at least one uplink transmission.

The configuration of the at least one time resource for the at least one uplink transmission may comprise an offset with respect to a time corresponding to a last physical uplink shared channel transmission to a cell.

The configuration of the at least one frequency resource for the at least one uplink transmission may comprise an offset with respect to a frequency corresponding to a last physical uplink shared channel transmission to a cell.

The offset may comprise an offset relative to at least one of: the cell, or a cell corresponding to a last physical uplink shared channel transmission from the user equipment.

Respective bits of the bitmap may be configured to indicate at least one of: a respective cell for the at least one uplink transmission, a respective frequency range of a serving cell for the at least one uplink transmission, or a carrier of the serving cell for the at least one uplink transmission.

The example apparatus may be further configured to: receive a request for the assistance information; and transmit the assistance information in response to the request.

In accordance with one aspect, an example method may be provided comprising: transmitting, with a user equipment to an apparatus, assistance information on power amplifier characteristics of the user equipment, wherein the user equipment may be configured to perform multiple uplink transmission to multiple cells; receiving, from the apparatus, an indication of a waveform switching configuration related to at least one uplink transmission resource, wherein the waveform switching configuration may be based, at least partially, on the assistance information; and transmitting, to the network node, at least one uplink transmission using the at least one uplink transmission resource.

The assistance information may comprise at least one of: a power amplifier capability of the user equipment, an indication of whether the user equipment is configured to perform multiple uplink transmissions with at least one common power amplifier, an indication of an output power achievable with the user equipment in a predetermined time, or an indication of a time in which a predetermined output power is achievable with the user equipment.

At least one of the indication of the output power achievable with the user equipment in the predetermined time, or the indication of the time in which the predetermined output power is achievable with the user equipment, may be provided via a power headroom report.

The assistance information may comprise at least one of: information identifying a relative time offset associated with at least one power amplifier of the user equipment, information identifying a relative frequency offset associated with the at least one power amplifier of the user equipment, information identifying a number of layers associated with the at least one power amplifier of the user equipment, or information identifying a power amplifier architecture associated with the user equipment.

The assistance information may further comprise an indication of one or more suggested characteristics for the waveform switching configuration, wherein the one or more suggested characteristics comprise at least one of: a configuration of at least one time resource for the at least one uplink transmission, a configuration of at least one frequency resource for the at least one uplink transmission, a configuration of at least one spatial resource for the at least one uplink transmission, a configuration of at least one power amplifier for the at least one uplink transmission, the at least one power amplifier for the at least one uplink transmission, a configuration of at least one layer for the at least one uplink transmission, a configuration of a waveform for the at least one uplink transmission, or a bitmap associated with the waveform for the at least one uplink transmission.

The configuration of the at least one time resource for the at least one uplink transmission may comprise an offset with respect to a time corresponding to a last physical uplink shared channel transmission to a cell.

The configuration of the at least one frequency resource for the at least one uplink transmission may comprise an offset with respect to a frequency corresponding to a last physical uplink shared channel transmission to a cell.

The offset may comprise an offset relative to at least one of: the cell, or a cell corresponding to a last physical uplink shared channel transmission from the user equipment.

Respective bits of the bitmap may be configured to indicate at least one of: a respective cell for the at least one uplink transmission, a respective frequency range of a serving cell for the at least one uplink transmission, or a carrier of the serving cell for the at least one uplink transmission.

The example method may further comprise: receiving a request for the assistance information; and transmitting the assistance information in response to the request.

In accordance with one example embodiment, an apparatus may comprise: circuitry configured to perform: transmitting, with a user equipment to an apparatus, assistance information on power amplifier characteristics of the user equipment, wherein the user equipment may be configured to perform multiple uplink transmission to multiple cells; circuitry configured to perform: receiving, from the apparatus, an indication of a waveform switching configuration related to at least one uplink transmission resource, wherein the waveform switching configuration may be based, at least partially, on the assistance information; and circuitry configured to perform: transmitting, to the network node, at least one uplink transmission using the at least one uplink transmission resource.

In accordance with one example embodiment, an apparatus may comprise: processing circuitry; memory circuitry including computer program code, the memory circuitry and the computer program code configured to, with the processing circuitry, enable the apparatus to: transmit, to an apparatus, assistance information on power amplifier characteristics of the user equipment, wherein the user equipment may be configured to perform multiple uplink transmission to multiple cells; receive, from the apparatus, an indication of a waveform switching configuration related to at least one uplink transmission resource, wherein the waveform switching configuration may be based, at least partially, on the assistance information; and transmit, to the network node, at least one uplink transmission using the at least one uplink transmission resource.

In accordance with one example embodiment, an apparatus may comprise means for performing: transmitting, to an apparatus, assistance information on power amplifier characteristics of the user equipment, wherein the user equipment may be configured to perform multiple uplink transmission to multiple cells; receiving, from the apparatus, an indication of a waveform switching configuration related to at least one uplink transmission resource, wherein the waveform switching configuration may be based, at least partially, on the assistance information; and transmitting, to the network node, at least one uplink transmission using the at least one uplink transmission resource.

The assistance information may comprise at least one of: a power amplifier capability of the user equipment, an indication of whether the user equipment is configured to perform multiple uplink transmissions with at least one common power amplifier, an indication of an output power achievable with the user equipment in a predetermined time, or an indication of a time in which a predetermined output power is achievable with the user equipment.

At least one of the indication of the output power achievable with the user equipment in the predetermined time, or the indication of the time in which the predetermined output power is achievable with the user equipment, may be provided via a power headroom report.

The assistance information may comprise at least one of: information identifying a relative time offset associated with at least one power amplifier of the user equipment, information identifying a relative frequency offset associated with the at least one power amplifier of the user equipment, information identifying a number of layers associated with the at least one power amplifier of the user equipment, or information identifying a power amplifier architecture associated with the user equipment.

The assistance information may further comprise an indication of one or more suggested characteristics for the waveform switching configuration, wherein the one or more suggested characteristics may comprise at least one of: a configuration of at least one time resource for the at least one uplink transmission, a configuration of at least one frequency resource for the at least one uplink transmission, a configuration of at least one spatial resource for the at least one uplink transmission, a configuration of at least one power amplifier for the at least one uplink transmission, the at least one power amplifier for the at least one uplink transmission, a configuration of at least one layer for the at least one uplink transmission, a configuration of a waveform for the at least one uplink transmission, or a bitmap associated with the waveform for the at least one uplink transmission.

The configuration of the at least one time resource for the at least one uplink transmission may comprise an offset with respect to a time corresponding to a last physical uplink shared channel transmission to a cell.

The configuration of the at least one frequency resource for the at least one uplink transmission may comprise an offset with respect to a frequency corresponding to a last physical uplink shared channel transmission to a cell.

The offset may comprise an offset relative to at least one of: the cell, or a cell corresponding to a last physical uplink shared channel transmission from the user equipment.

Respective bits of the bitmap may be configured to indicate at least one of: a respective cell for the at least one uplink transmission, a respective frequency range of a serving cell for the at least one uplink transmission, or a carrier of the serving cell for the at least one uplink transmission.

The means may be further configured to perform: receive a request for the assistance information; and transmit the assistance information in response to the request.

In accordance with one example embodiment, a non-transitory computer-readable medium comprising instructions stored thereon which, when executed with at least one processor, cause the at least one processor to: cause transmitting, to an apparatus, of assistance information on power amplifier characteristics of the user equipment, wherein the user equipment may be configured to perform multiple uplink transmission to multiple cells; cause receiving, from the apparatus, of an indication of a waveform switching configuration related to at least one uplink transmission resource, wherein the waveform switching configuration may be based, at least partially, on the assistance information; and cause transmitting, to the network node, of at least one uplink transmission using the at least one uplink transmission resource.

In accordance with one example embodiment, a non-transitory computer-readable medium comprising program instructions stored thereon for performing at least the following: causing transmitting, to an apparatus, of assistance information on power amplifier characteristics of the user equipment, wherein the user equipment may be configured to perform multiple uplink transmission to multiple cells; causing receiving, from the apparatus, of an indication of a waveform switching configuration related to at least one uplink transmission resource, wherein the waveform switching configuration may be based, at least partially, on the assistance information; and causing transmitting, to the network node, of at least one uplink transmission using the at least one uplink transmission resource.

In accordance with another example embodiment, a non-transitory program storage device readable by a machine may be provided, tangibly embodying instructions executable by the machine for performing operations, the operations comprising: causing transmitting, to an apparatus, of assistance information on power amplifier characteristics of the user equipment, wherein the user equipment may be configured to perform multiple uplink transmission to multiple cells; causing receiving, from the apparatus, of an indication of a waveform switching configuration related to at least one uplink transmission resource, wherein the waveform switching configuration may be based, at least partially, on the assistance information; and causing transmitting, to the network node, of at least one uplink transmission using the at least one uplink transmission resource.

In accordance with another example embodiment, a non-transitory computer-readable medium comprising instructions that, when executed by an apparatus, cause the apparatus to perform at least the following: causing transmitting, to an apparatus, of assistance information on power amplifier characteristics of the user equipment, wherein the user equipment may be configured to perform multiple uplink transmission to multiple cells; causing receiving, from the apparatus, of an indication of a waveform switching configuration related to at least one uplink transmission resource, wherein the waveform switching configuration may be based, at least partially, on the assistance information; and causing transmitting, to the network node, of at least one uplink transmission using the at least one uplink transmission resource.

A computer implemented system comprising: at least one processor and at least one non-transitory memory storing instructions that, when executed by the at least one processor, cause the system at least to perform: causing transmitting, to an apparatus, of assistance information on power amplifier characteristics of the user equipment, wherein the user equipment may be configured to perform multiple uplink transmission to multiple cells; causing receiving, from the apparatus, of an indication of a waveform switching configuration related to at least one uplink transmission resource, wherein the waveform switching configuration may be based, at least partially, on the assistance information; and causing transmitting, to the network node, of at least one uplink transmission using the at least one uplink transmission resource.

A computer implemented system comprising: means for causing transmitting, to an apparatus, of assistance information on power amplifier characteristics of the user equipment, wherein the user equipment may be configured to perform multiple uplink transmission to multiple cells; means for causing receiving, from the apparatus, of an indication of a waveform switching configuration related to at least one uplink transmission resource, wherein the waveform switching configuration may be based, at least partially, on the assistance information; and means for causing transmitting, to the network node, of at least one uplink transmission using the at least one uplink transmission resource.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

The following is a description of the way in which the present embodiments may be proposed for future 3GPP standards. Whilst various features may be described as being essential or necessary, this may only be the case for the 3GPP standards, for example due to other requirements imposed by the standards. These statements should not, therefore, be construed as limiting the present embodiments in any way.

### Dynamic switching between DFT-s-OFDM and CP-OFDM

### 1. Introduction

In RAN #94e a new work item description was approved on further NR coverage enhancements. Three main objectives characterize the work item:
"...The detailed objectives of the work item are as follows:
Specify following PRACH coverage enhancements (RAN1, RAN2)
   Multiple PRACH transmissions with same beams for 4-step RACH procedure
   Study, and if justified, specify PRACH transmissions with different beams for 4-step RACH procedure
   Note 1: The enhancements of PRACH are targeting for FR2, and can also apply to FR1 when applicable.
   Note 2: The enhancements of PRACH are targeting short PRACH formats, and can also apply to other formats when applicable.
Study and if necessary, specify following power domain enhancements
   Enhancements to realize increasing UE power high limit for CA and DC based on Rel-17 RAN4 work on "Increasing UE power high limit for CA and DC", in compliance with relevant regulations (RAN4, RANI)
   Enhancements to reduce MPR/PAR, including frequency domain spectrum shaping with and without spectrum extension for DFT-S-OFDM and tone reservation (RAN4, RANI)
Specify enhancements to support dynamic switching between DFT-S-OFDM and CP-OFDM (RANI)..."

This contribution focuses on the last objective of the work item, i.e., dynamic switching between DFT-S-OFDM and CP-OFDM.

### Discussion

### Other issues related to requirements and scenarios

In previous RANI meetings, the applicability of DWS to UL mTRP and CA scenarios was raised. The discussion is motivated by different channel conditions between TRPs or CCs.

### Consecutive PUSCH transmissions with different waveforms in mTRP

In RAN1#111 and RAN1#112, there were some discussions on whether DWS is supported in different scenarios with different requirements. Considering Rel-18 MIMO WI for mTRP enhancements, e.g., extension of indicating of multiple DL/UL TCI states and simultaneous multi-panel UL transmissions on the one hand, and 1-bit DCI field for DWS indication on the other hand, supporting same or different waveforms for PUSCHs to different TRPs requires further studies. As TRP could be on different positions facing different channel conditions, UE may suffer from poor coverage with respect to one TRP and have good coverage with respect to other TRP(s). Therefore, DWS for PUSCHs in mTRP scenario may be needed to allow the dynamic adaptation and coverage enhancement when switching to DFT-s-OFDM.

### Observation 1. Dynamic waveform switching for PUSCHs in m-TRP scenario requires further studies.

One potential concern is on relative power tolerance, which is specified in Section 6.3.4.3 of TS 38.101-1 as follows.
"...The relative power tolerance is the ability of the UE transmitter to set its output power in a target sub-frame (1 ms) relatively to the power of the most recently transmitted reference sub-frame (1 ms) if the transmission gap between these sub-frames is less than or equal to 20 ms.
The minimum requirements specified in Table 6.3.4.3-1 apply when the power of the target and reference sub-frames are within the power range bounded by the minimum output power as defined in clause 6.3.1 and the measured *PUMAX* as defined in clause 6.2.4.
To account for RF Power amplifier mode changes, 2 exceptions are allowed for each of two test patterns. The test patterns are a monotonically increasing power sweep and a monotonically decreasing power sweep over a range bounded by the requirements of minimum power and maximum power specified in clauses 6.3.1 and 6.2.1, respectively. For those exceptions, the relative power tolerance limit is a maximum of ± 6.0 dB in Table 6.3.4.3-1.

**Table 6.3.4.3-1: Relative power tolerance**

| **Power step DP (Up or down) (dB)** | | **All combinations of PUSCH and PUCCH transitions (dB)** | **All combinations of PUSCH/PUCCH and SRS transitions between sub-frames (dB)** | **PRACH (dB)** |
|---|---|---|---|---|
| ΔP < 2 | | + 2.0 (NOTE) | ± 2.5 | ± 2.0 |
| 2 ≤ ΔP < 3 | | ± 2.5 | ± 3.5 | ± 2.5 |
| 3 ≤ ΔP < 4 | | ± 3.0 | ± 4.5 | ± 3.0 |
| 4 ≤ ΔP < 10 | | ± 3.5 | ± 5.5 | ± 3.5 |
| 10 ≤ ΔP < 15 | | ± 4.0 | ± 7.0 | ± 4.0 |
| 15 ≤ ΔP | | ± 5.0 | ± 8.0 | ± 5.0 |
| NOTE: | For PUSCH to PUSCH transitions with the allocated resource blocks fixed in frequency and no transmission gaps other than those generated by downlink subframes, DwPTS fields or Guard Periods: for a power step ΔP ≤ 1 dB, the relative power tolerance for transmission is ± 0.7 dB. | | | |

| | | | | |
|---|---|---|---|---|
| ..." | | | | |

Considering the relative power limits described above on the one hand, and consecutive PUSCH transmissions using different TRPs with time multiplexing in current specification in which all transmissions using the same waveform on the other hand, if different waveforms are used for consecutive PUSCH transmissions using different TRPs, then UE may not be able to fully exploit the advantage of using DFT-s-OFDM for PUSCH in one TRP if the PUSCH is consecutively scheduled after another PUSCH with CP-OFDM to another TRP. However, the need to perform DWS for all PUSCHs to same or different waveforms would mainly depend on whether these PUSCHs share a common power amplifier or not. As an example, if PUSCHs corresponding to two TRPs share a common power amplifier, a new capability indication from the UE during consecutive mTRP PUSCH transmissions on the duration to achieve a target power step deltaP using non-monotonic sweeping or a minimum duration, within which gNB needs to keep the same waveform can be beneficial for consecutive PUSCH transmissions in mTRP scenarios using different waveform.

**Proposal 1.** If DWS is supported for m-TRP, RANI to further study relative power tolerance restrictions in consecutive PUSCH transmissions with different waveforms in mTRP scenario and to further considering potential capability indication on the duration to achieve a target power step deltaP using non-monotonic sweeping.

### Multiple PUSCHs on multiple serving cells

In case of multiple TBs/PUSCHs on multiple serving cells, the NW might not be able to take full advantage of the DWS for the coverage enhancement, and in some cases, the UE might even suffer from a worst coverage due to DWS.

Indeed, let's consider a scenario of multiple PUSCHs on multiple serving cells, wherein UE might have good coverage in a first cell (thus CP-OFDM is used) and poor coverage in a second cell. One way to enhance UL coverage of the UE in the second cell is to switch the waveform to DFT-s-OFDM. Under this scenario, let's consider two cases:
**Case 1:** The two PUSCHs overlap in time. Due to the overlapping, the PA efficiency is limited since the time slot contains a combination of the two WFs (DFT-s-OFDM and CP-OFDM), and the MPR could be determined by the worse waveform of the highest PAPR, i.e., CP-OFDM in this case, which makes the switching to DFT-s-OFDM in the second cell being meaningless.
**Case 2:** The two PUSCHs have a time gap of less than or equal to 20 ms. Based on the discussion above, the relative power tolerance in the current specs considers only monotonically power sweeping while defining the relative power tolerance values in Table 6.3.4.3-1 of 3GPP TS 38.101-1 version 15.5.0 to account for RF Power amplifier mode changes even with the same waveform having the same IBO/OBO for PA. Therefore, non-monotonic power sweeping for UL transmissions with multiple cells could result in smaller tolerance values (a wider gap between Power step deltaP and relative tolerance) or allow more than the two current exceptions for UE implementation considered with the monotonic sweep, which could reduce the appropriateness of DWS to DFT-s-OFDM for some cells. Let's consider the following two examples:
   Example 1: if relative power tolerance for cell1 [Equation] = X dB and relative power tolerance for cell2 [Equation]= X+6dB, DWS to DFT-s-OFDM for cell2 wouldn't allow any power boost if the time gap is smaller than 20ms.
   Example 2: If [Equation] =X+4.5 dB with a time gap <20ms and the monotonic power sweep is maintained, then the new [Equation] could be increased up to X+6dB (i.e., DWS to DFT-s-OFDM is helpful). However, if the power among multi-PUSCH is non-monotonic and the corresponding maximum relative power tolerance could be reduced to 3dB depending on UE capability as example (i.e., [Equation]=X+3 dB), then this would lead to worse coverage.

**Note:** The previously mentioned cases assume a single power amplifier UE or a common PA is shared among different PUSCHs, while for UE with multi-PA capability (i.e., dualPA-Architecture) or not sharing a common PA among the different PUSCHs, the issues may not exist since each PA can serve each of the two different cells with a different power tolerance and 20ms time gap.

Therefore, if DWS is supported for the scenario of multiple PUSCHs on multiple serving cells, gNB should carefully handle the scenarios of consecutive (within a time gap of 20ms) or overlapping PUSCHs on different cells having significant power difference. For example, the gNB may schedule PUSCHs with sufficient time delay (to avoid the 20ms time gap), or request UE to use different PAs for different cells (in case UE supports more than one PA), or apply the same WF for all served cells (though this approach may be restrictive if DFT-s-OFDM is always used).

**Observation 2.** If DWS is supported for multiple PUSCHs on multiple serving cells scenario, DWS to DFT-s-OFDM for PUSCH in one cell may not help improving coverage for a single PA UE in case consecutive PUSCHs overlap or have a time gap of less or equal to 20ms.

**Proposal 2.** RANI to further study the DWS for multiple PUSCHs in multiple serving cells considering further analysis on consecutive PUSCHs scenario.

## Claims

1. A user equipment comprising means for performing:
transmitting, to a network node, assistance information on power amplifier characteristics of the user equipment, wherein the user equipment is configured to perform multiple uplink transmission to multiple cells;
receiving, from the network node, an indication of a waveform switching configuration related to at least one uplink transmission resource, wherein the waveform switching configuration is based, at least partially, on the assistance information; and
transmitting, to the network node, at least one uplink transmission using the at least one uplink transmission resource.

2. The user equipment of claim 1, wherein the assistance information comprises at least one of:
a power amplifier capability of the user equipment,
an indication of whether the user equipment is configured to perform multiple uplink transmissions with at least one common power amplifier,
an indication of an output power achievable with the user equipment in a predetermined time, or
an indication of a time in which a predetermined output power is achievable with the user equipment.

3. The user equipment of claim 2, wherein at least one of the indication of the output power achievable with the user equipment in the predetermined time, or the indication of the time in which the predetermined output power is achievable with the user equipment, is provided via a power headroom report.

4. The user equipment of claim 1, wherein the assistance information comprises at least one of:
information identifying a relative time offset associated with at least one power amplifier of the user equipment,
information identifying a relative frequency offset associated with the at least one power amplifier of the user equipment,
information identifying a number of layers associated with the at least one power amplifier of the user equipment, or
information identifying a power amplifier architecture associated with the user equipment.

5. The user equipment of any of claims 1 through 4, wherein the assistance information further comprises an indication of one or more suggested characteristics for the waveform switching configuration, wherein the one or more suggested characteristics comprise at least one of:
a configuration of at least one time resource for the at least one uplink transmission,
a configuration of at least one frequency resource for the at least one uplink transmission,
a configuration of at least one spatial resource for the at least one uplink transmission,
a configuration of at least one power amplifier for the at least one uplink transmission,
the at least one power amplifier for the at least one uplink transmission,
a configuration of at least one layer for the at least one uplink transmission,
a configuration of a waveform for the at least one uplink transmission, or
a bitmap associated with the waveform for the at least one uplink transmission.

6. The user equipment of claim 5, wherein the configuration of the at least one time resource for the at least one uplink transmission comprises an offset with respect to a time corresponding to a last physical uplink shared channel transmission to a cell.

7. The user equipment of claim 5, wherein the configuration of the at least one frequency resource for the at least one uplink transmission comprises an offset with respect to a frequency corresponding to a last physical uplink shared channel transmission to a cell.

8. The user equipment of claim 6 or 7, wherein the offset comprises an offset relative to at least one of:
the cell, or
a cell corresponding to a last physical uplink shared channel transmission from the user equipment.

9. The user equipment of claim 5, wherein respective bits of the bitmap are configured to indicate at least one of:
a respective cell for the at least one uplink transmission,
a respective frequency range of a serving cell for the at least one uplink transmission, or
a carrier of the serving cell for the at least one uplink transmission.

10. The user equipment of any of claims 1 through 9, wherein the means are further configured for performing:
receiving a request for the assistance information; and
transmitting the assistance information in response to the request.

11. An apparatus comprising means for performing:
receiving, from a user equipment, assistance information on power amplifier characteristics of the user equipment, wherein the user equipment is configured to perform multiple uplink transmissions to multiple cells;
configuring at least one uplink transmission resource, based on the assistance information, for at least one uplink transmission of the multiple uplink transmissions; and
transmitting, to the user equipment, an indication of a waveform switching configuration related to the at least one uplink transmission resource.

12. The apparatus of claim 11, wherein the assistance information comprises at least one of:
a power amplifier capability of the user equipment,
an indication of whether the user equipment is configured to perform multiple uplink transmissions with at least one common power amplifier,
an indication of an output power achievable with the user equipment in a predetermined time, or
an indication of a time in which a predetermined output power is achievable with the user equipment.

13. A method comprising:
transmitting, with a user equipment to a network node, assistance information on power amplifier characteristics of the user equipment, wherein the user equipment is configured to perform multiple uplink transmission to multiple cells;
receiving, from the network node, an indication of a waveform switching configuration related to at least one uplink transmission resource, wherein the waveform switching configuration is based, at least partially, on the assistance information; and
transmitting, to the network node, at least one uplink transmission using the at least one uplink transmission resource.

14. A method comprising:
receiving, with a network node from a user equipment, assistance information on power amplifier characteristics of the user equipment, wherein the user equipment is configured to perform multiple uplink transmissions to multiple cells;
configuring at least one uplink transmission resource, based on the assistance information, for at least one uplink transmission of the multiple uplink transmissions; and
transmitting, to the user equipment, an indication of a waveform switching configuration related to the at least one uplink transmission resource.

15. A computer-readable medium comprising instructions that, when executed by an apparatus, cause the apparatus to perform at least the following:
causing transmitting, to a network node, of assistance information on power amplifier characteristics of the user equipment, wherein the user equipment is configured to perform multiple uplink transmission to multiple cells;
causing receiving, from the network node, of an indication of a waveform switching configuration related to at least one uplink transmission resource, wherein the waveform switching configuration is based, at least partially, on the assistance information; and
causing transmitting, to the network node, of at least one uplink transmission using the at least one uplink transmission resource.
